# FASCICULE DE BREVET EUROPEEN

(11) **EP 2 849 295 B1**
(45) Date de publication et mention de la délivrance du brevet: **16.03.2016**
(21) Numéro de dépôt: 14184004.1
(22) Date de dépôt: 09.09.2014
(51) Int. Cl.: H02B 1/20, H01H 71/08

(54) **Ensemble de distribution électrique comportant un peigne multipolaire de répartition d une énergie électrique.**
Elektrische Verteilungsanordnung mit einem mehrpoligen Stromverteilungskamm.
Electric distribution assembly comprising a multipole electric power distribution comb.

(30) Priorité: 13.09.2013 FR 1358859
(43) Date de publication de la demande: 18.03.2015
(73) Titulaire: Schneider Electric Industries SAS, 92500 Rueil-Malmaison (FR)
(72) Inventeur: Belin, Yves, 38050 Grenoble Cedex 09 (FR); Payet-Burin, Jean-Luc, 38050 Grenoble Cedex 09 (FR)
(74) Mandataire: Colette, Marie-Françoise

(56) Documents cités:
- EP-A1- 0 387 158
- EP-A1- 1 903 647
- FR-A1- 2 873 502

## Description

### DOMAINE TECHNIQUE

La présente invention concerne un ensemble de distribution électrique comportant un peigne multipolaire de répartition d'une énergie électrique entre une pluralité d'appareils électriques modulaires et un dispositif d'alimentation électrique dudit peigne, ledit peigne comportant au moins une barre conductrice comportant une rangée de dents disposées suivant un pas égal à une distance prédéterminée correspondant à au moins un module, lesdits appareils électriques présentant un format modulaire, chaque appareil présentant une forme globalement parallélépipédique et comportant deux faces principales et deux faces latérales s'étendant de l'une à l'autre des faces principales, avec une largeur, c'est-à-dire un écart entre les deux faces principales égale à un nombre entier de module(s), et avec l'une desdites faces latérales présentant au moins un orifice donnant accès à au moins une borne adaptée à recevoir une dent dudit peigne, et le dispositif d'alimentation dudit peigne comportant un module auxiliaire de raccordement électrique des bornes aval de l'un des appareil dit appareil tête de groupe avec respectivement les différentes barres du peigne de manière à assurer son alimentation, ledit module auxiliaire étant juxtaposé aux autres appareils sur un rail de montage et disposé entre l'appareil tête de groupe et les autres appareils, les bornes aval et le peigne étant disposés respectivement d'un côté et de l'autre du rail.

### ETAT DE LA TECHNIQUE ANTERIEURE

On connaît le document FR 2873502 décrivant un peigne multipolaire de répartition du genre précédemment mentionné, ce peigne comportant à l'une de ses extrémités, une zone de raccordement à un module auxiliaire, ledit module auxiliaire étant destiné à relier électriquement les bornes aval d'un interrupteur différentiel aux différentes barres dudit peigne. Sur cette zone de raccordement, le peigne comporte quatre dents dont trois appartiennent respectivement à trois barres conductrices de phase, tandis que la quatrième dent appartient à une barre destinée à transporter le neutre.
Ce peigne est spécifique et il ne peut pas être réalisé à partir d'un peigne standard, ce qui renchérit son coût de fabrication.
D'autre part, lorsque ce peigne nécessite d'être recoupé, il ne peut ensuite être réutilisé et raccordé à un autre auxiliaire de raccordement.

### EXPOSE DE L'INVENTION

La présente invention résout ces inconvénients et propose un ensemble de distribution électrique comportant un peigne multipolaire de répartition et un dispositif d'alimentation dudit peigne, de conception simple, permettant de connecter sans vis un dispositif d'alimentation présentant une largeur modulaire, par exemple de 18 mm, audit peigne, lequel peigne pouvant distribuer plus d'une phase et le neutre, ainsi qu'un peigne utilisé dans cet ensemble de distribution électrique.
La présente invention a également pour objet de proposer un ensemble de distribution comportant un peigne fabriqué à partir d'un peigne standard, ledit peigne pouvant être recoupé à la demande, tout en permettant toujours un raccordement au dispositif d'alimentation précité de la partie retirée du peigne après découpe.

A cet effet, la présente invention a pour objet un ensemble de distribution électrique du genre précédemment mentionné, cet ensemble étant caractérisé en ce que ledit peigne comporte au moins une zone destinée au raccordement électrique du module auxiliaire de raccordement audit peigne, ladite zone comportant un certain nombre de portions de barre non équipées de dents et un certain nombre de portions de barres équipées de dents, en ce que ledit module auxiliaire précité comporte d'une part, au moins un élément de raccordement dits premiers dont le nombre correspond au nombre de dents présentes dans cette zone, et d'autre part, un certain nombre d'éléments de raccordement dits seconds, ce nombre correspondant au nombre de portions de barres ne comportant pas de dents dans cette zone, les éléments de raccordement dits premiers étant destinés à coopérer avec les dents précitées présentes dans cette zone, tandis que les éléments de raccordement dits seconds sont destinés à coopérer avec les portions de barre ne comportant pas de dents lors du raccordement électrique du module auxiliaire audit peigne.
Ces caractéristiques permettent le raccordement au peigne d'un dispositif d'alimentation sur une zone du peigne correspondant à un module, par exemple de 18mm, le peigne pouvant comporter plus de deux phases (phase et neutre). Grâce à ces caractéristiques, le peigne peut être réalisé à partir d'un peigne standard.

Selon une caractéristique particulière préférée, les éléments de raccordement précités comportent des pinces.

Selon une caractéristique particulière préférée, les éléments de raccordement dits premiers sont disposés dans un plan dit premier, et les éléments de raccordement dits seconds sont disposés dans un plan dit second, ces deux plans étant décalés suivant la hauteur des appareils, cette hauteur étant définie perpendiculairement aux faces latérales des appareils.

Selon une autre caractéristique préférée, les éléments de raccordement dits premiers sont situés à l'intérieur du module auxiliaire de raccordement tandis que les éléments de raccordement dits seconds sont situés à l'extérieur dudit module.

Selon une autre caractéristique préférée, la ou chaque zone précitée présente une longueur, parallèlement à la direction longitudinale du peigne, correspondant sensiblement à celle d'un module.

Selon une réalisation particulière préférée, le peigne précité comporte une barre dite de neutre et au moins une barre dite de phase, une dent de neutre étant disposée entre deux dents de phase successives, et dans la ou chacune des zones précitées, le nombre d'éléments de raccordement dits premier est de deux et le nombre d'éléments de raccordement dits second est de deux.

Selon une réalisation particulière, le peigne précité est du type tripolaire et neutre comportant une barre de neutre et trois barres de phases.

Selon une autre réalisation, le peigne précité est du type tétra polaire et comporte quatre barres distribuant une phase, et le nombre d'éléments de raccordement dits premiers est de un tandis que le nombre d'éléments de raccordement dits seconds est de trois.

Selon une caractéristique particulière préférée, la longueur d'un module est de 18mm.

Selon une autre caractéristique préférée, ce peigne comporte au moins une zone située ailleurs qu'à l'extrémité du peigne, ledit peigne étant apte à être sectionné avant cette zone, la portion de peigne retirée étant réutilisable et pouvant être raccordée de nouveau à un autre module auxiliaire de raccordement.

Selon une autre caractéristique préférée, ce peigne comporte plusieurs zones pouvant être raccordées chacune à un module auxiliaire de raccordement, lesdites zones étant séparées deux à deux par une portion de peigne dont la longueur correspond sensiblement à celle d'un multiple de la longueur d'un module.

Selon une autre caractéristique, le peigne est du type tri-polaire et neutre, lesdites zones étant séparées deux à deux par une portion de peigne dont la longueur correspond sensiblement à trois fois la longueur d'un module.

Selon une autre caractéristique préférée, ledit peigne comporte plusieurs ensembles, chaque ensemble comportant une dent de neutre appartenant à la barre de neutre et plusieurs dents de phase appartenant respectivement aux différentes barres de phase, ledit ensemble étant disposé de manière répétitive le long du peigne, et en ce qu'il comporte une zone de raccordement à un module auxiliaire de raccordement situé à l'une des extrémités du peigne et une zone de raccordement situé entre deux ensembles successifs, et ce sur une partie seulement de la longueur du peigne ou bien sur toute la longueur du peigne. Ainsi, le peigne peut être recoupé à la demande et peut être réutilisé ensuite en permettant un raccordement à un dispositif d'alimentation.

Selon une réalisation particulière, le peigne comporte une zone de raccordement à un module auxiliaire de raccordement située sensiblement au milieu de la longueur du peigne de manière à équilibrer les charges électrique sur le peigne, ladite zone étant destinée à être reliée électriquement à un module auxiliaire de raccordement alimenté en amont par des câbles.

La présente invention a encore pour objet un peigne de distribution destiné à être utilisé dans un ensemble de distribution électrique comportant les caractéristiques précédemment mentionnées prises seules ou en combinaison.

Selon une caractéristique particulière, ce peigne comporte une enveloppe réalisée en un matériau isolant et comportant un certain nombre de logements longitudinaux destinés à recevoir respectivement lesdites barres conductrices et permettant de retenir ces barres à l'intérieur de ces logements, lesdites barres étant superposées dans un même plan, à l'exception des dents faisant saillie de ce plan en direction des appareils modulaires.

Selon une autre caractéristique, ladite enveloppe comporte dans la ou les zones de raccordement précitée(s) et de part et d'autres des portions de barre ne comportant pas de dents, des portions d'enveloppe évidées, ou alvéoles, de manière à permettre l'introduction des éléments de raccordement dits seconds afin de réaliser la connexion de ces éléments de raccordement dits seconds aux portions de barre correspondantes.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue partielle en perspective, illustrant un ensemble de distribution électrique selon une réalisation particulière de l'invention en position de service,
- La figure 2 est une vue similaire à la figure précédente, selon une autre orientation de l'ensemble de distribution et des appareils,
- La figure 3 est une vue similaire à la précédente, selon encore une autre orientation, et sans l'appareil tête de groupe,
- La figure 4 est une vue en coupe selon un plan parallèle au plan des faces principales des appareils, et illustrant plus particulièrement la partie intérieure des appareils,
- La figure 5 est une vue en perspective d'un peigne du type tripolaire et neutre selon une réalisation particulière de l'invention,
- La figure 6 est une vue partielle de face de ce même peigne,
- La figure 7 est une vue en perspective du même peigne, les différentes barres ayant été séparées de l'enveloppe du peigne,
- La figure 8 est une vue en perspective illustrant ce même peigne, auquel est relié électriquement un module auxiliaire de raccordement, selon une réalisation particulière de l'invention, et
- La figure 9 est une vue partielle en coupe, illustrant un ensemble de distribution électrique selon une autre réalisation de l'invention dans laquelle le peigne est du type tétrapolaire.

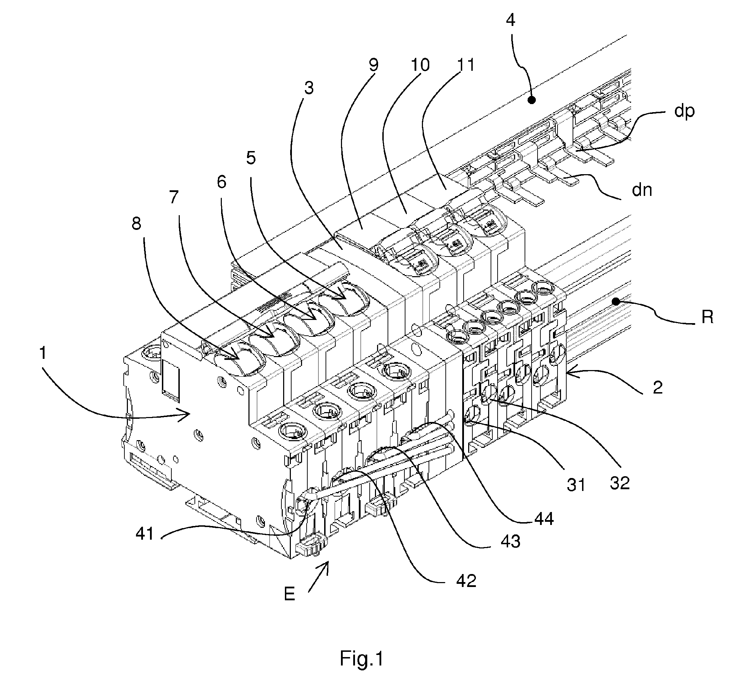

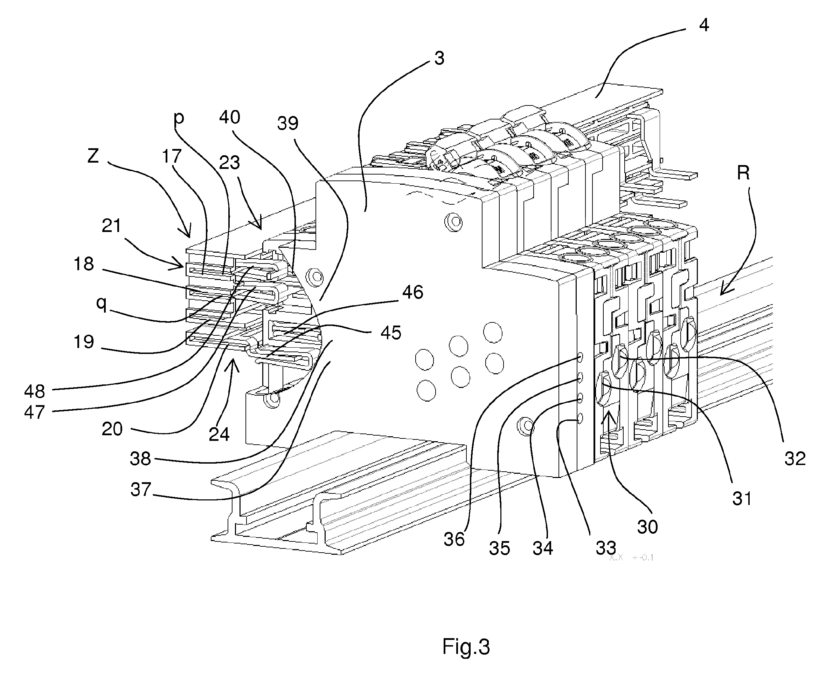

Sur les figures 1 à 3, on voit un ensemble E d'appareils électriques modulaires montés côte à côte sur un rail R de montage et comprenant un appareil de protection différentielle 1, appelé aussi appareil tête de groupe, plusieurs disjoncteurs du type unipolaire et neutre 2, ainsi qu'un module auxiliaire dit de raccordement 3 destiné à alimenter un peigne de répartition 4, ledit peigne étant destiné à alimenter électriquement les disjoncteurs ainsi que d'autres appareils de protection électrique qui pourraient être juxtaposés à droite des disjoncteurs tout au long du rail.

Les appareils sont du type modulaire. Ainsi, l'appareil de protection différentiel 1 du type tripolaire et neutre, comporte trois modules de phase 5,6,7 et un module de neutre 8 et présente une largeur correspondant à celle de quatre modules unitaires. Le module auxiliaire de raccordement 3 présente une largeur correspondant à celle d'un module unitaire. Et les disjoncteurs 2 comportent chacun un module 9, 10, 11, 12.

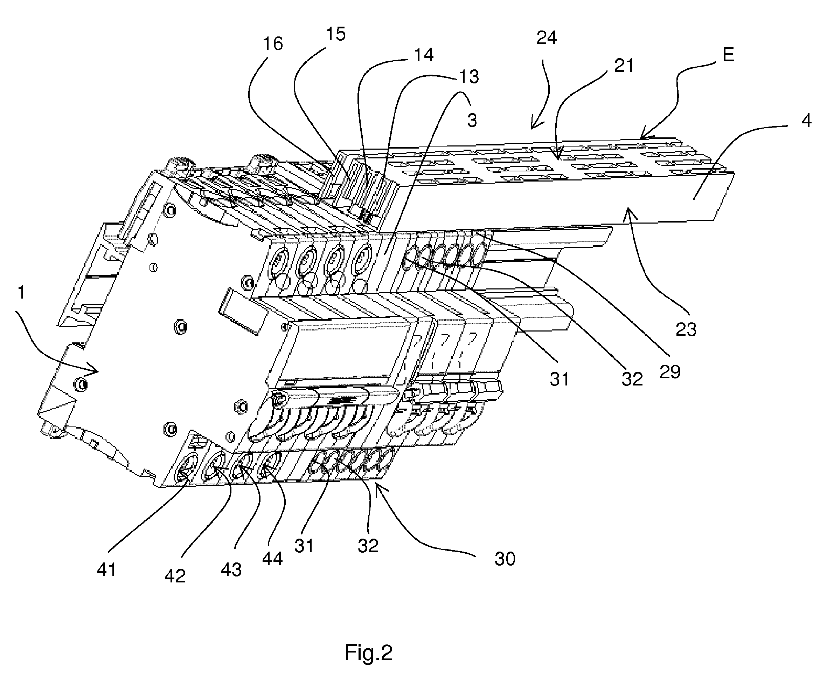

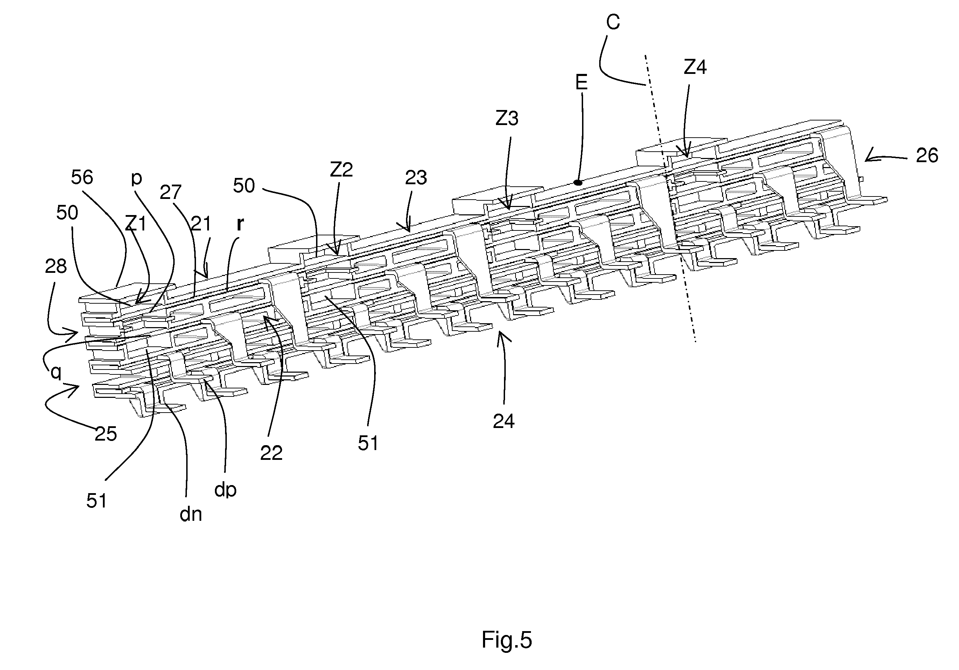

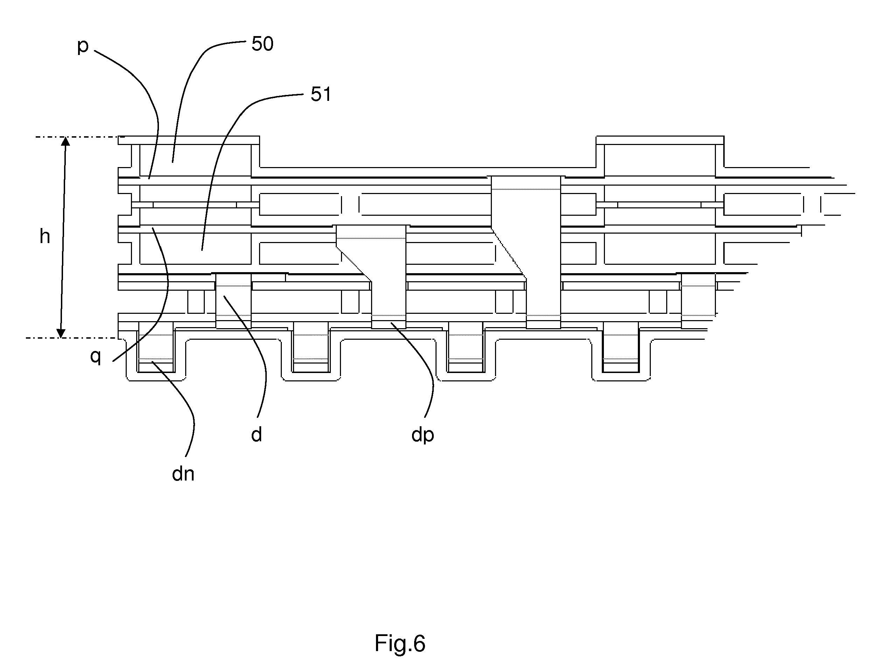

Le peigne de répartition 4, tel que plus particulièrement illustré sur les figures 5 à 7, comporte une enveloppe E comportant quatre logements longitudinaux 13,14,15,16 (fig.2) s'étendant sensiblement parallèlement à la direction longitudinale du rail R, lesdits logements étant destinés à recevoir respectivement les parties plates de quatre barres 17,18,19,20 destinées à véhiculer respectivement trois phases et le neutre. Cette enveloppe E est de préférence réalisée dans une matière plastique suffisamment rigide et élastique pour permettre l'insertion des barres 17 à 20 à l'intérieur de l'enveloppe tout en assurant un maintien des dites barres 17 à 20 à l'intérieur de l'enveloppe E une fois leur mise en place effectuée.

Cette enveloppe E présente six faces 21, 22, 23, 24, 25, 26 à savoir deux faces principales 21,22, deux faces latérales 23,24, et deux faces d'extrémité 25,26. Chacune des barres précitées 17 à 20 comporte un certain nombre de dents d s'étendant à partir de l'un 27 des bords longitudinaux de l'enveloppe E, celui se trouvant du côté opposé au fond 28 de l'enveloppe E, lesdites dents d étant en saillie à partir de la face principale 22 du peigne située du côté des appareils.

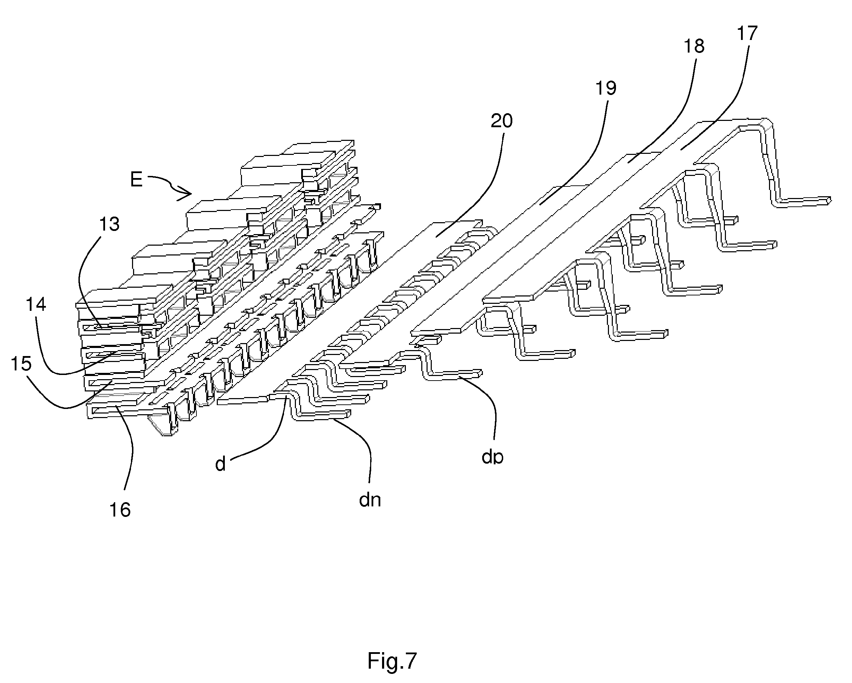

Tel que plus particulièrement visible sur la figure 7, chacune des dents d est pliée deux fois à angle droit, de manière que les parties d'extrémité desdites dents s'étendent dans un plan décalé suivant la profondeur des appareils, par rapport au plan de la barre associée auxdites dents.

La barre de neutre 20 comporte un nombre de dents d plus important que les barres de phase 17, 18, 19, car une fois les barres montées à l'intérieur de l'enveloppe E, une dent de neutre dn est intercalée entre deux dents de phase dp successives.

Ainsi, le peigne 4 distribue successivement les trois phases, et ce de manière répétitive le long du rail, avec interposition d'une dent de neutre dn entre deux dents de phase dp successives.

Conformément à l'invention, le peigne de répartition 4 comporte au moins une zone dite de raccordement Z,Z1,Z2,Z3,Z4, cette zone étant destinée au raccordement électrique entre le peigne 4 et le module auxiliaire de raccordement précité 3 de manière à permettre l'alimentation électrique dudit peigne 4. Conformément à l'invention, cette zone de raccordement Z présente une largeur parallèlement à la direction longitudinale du rail R, correspondant sensiblement à la largeur du module auxiliaire de raccordement 3, cette largeur correspondant sensiblement, dans cette réalisation particulière, à celle d'un module unitaire. Selon la réalisation illustrée sur les figures 1 à 8, le peigne 4 est du type tripolaire et neutre, l'interrupteur différentiel est du type tripolaire et neutre et les disjoncteurs sont du type unipolaire et neutre. Ainsi, chaque disjoncteur modulaire comporte sur ses deux faces latérales opposées 29,30, une borne de neutre 31 et une borne de phase 32. Ainsi, la zone de raccordement Z précitée du peigne 4 comporte une dent de neutre dn et une dent de phase dp, ainsi que deux portions de barre p,q ne comportant pas de dent.

Selon la réalisation décrite sur ces figures 1 à 8, cette zone de raccordement Z comporte une dent de neutre dn sur la barre située à l'une des extrémités du peigne située du côté du rail, ainsi qu'une dent de phase dp, dite phase 1, sur la barre située juste au dessus de la dent de neutre dn.

Le module auxiliaire de raccordement 3 quant à lui, comporte sur ses deux faces latérales opposées respectivement quatre bornes d'entrée 33, 34, 35, 36 et quatre bornes de sorties 37, 38, 39, 40. Ces quatre bornes d'entrée 33, 34, 35, 36 sont destinées à être reliées électriquement respectivement aux quatre bornes de sortie 41, 42, 43, 44 de l'appareil de protection différentielle 1, tandis que les bornes de sortie 37, 38, 39, 40 du module de raccordement auxiliaire 3 sont destinées à être reliées électriquement aux différentes barres 17, 18, 19, 20 du peigne de répartition 4 afin de réaliser son alimentation.

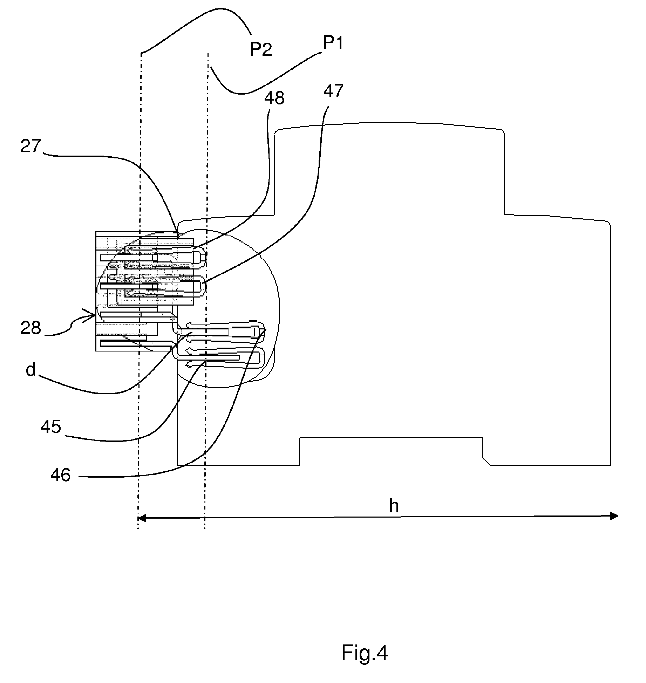

Ainsi, ce module auxiliaire de raccordement 3 comporte deux éléments de raccordement 45,46, avantageusement deux pinces, dites premières, destinées à être reliés électriquement aux deux dents dn,dp présentes dans la zone de raccordement, ainsi que deux éléments de raccordement 47,48, avantageusement deux autres pinces, dites secondes, destinées à être reliés électriquement aux deux portions de barres p,q non équipées de dents, présentes dans cette même zone. Ces quatre pinces 45,46,47,48 sont reliées électriquement et mécaniquement aux plages correspondantes du module auxiliaire de raccordement, et comprennent deux pinces 45,46, dites premières, situées à l'intérieur du module, et destinées à être raccordées aux dents dn,dp présentes dans la zone de raccordement 29, ainsi que deux pinces dites secondes 47,48 en saillie par rapport à la face latérale correspondante de l'appareil, et destinées à être raccordées aux portions de barre p,q non équipées de dent. Ainsi les pinces dites premières 45,46 sont situées dans un plan p1 décalé suivant la hauteur h des appareils par rapport au plan p2 dans lequel sont situées les pinces 47,48 dites secondes, tel que particulièrement illustré sur la figure 4.

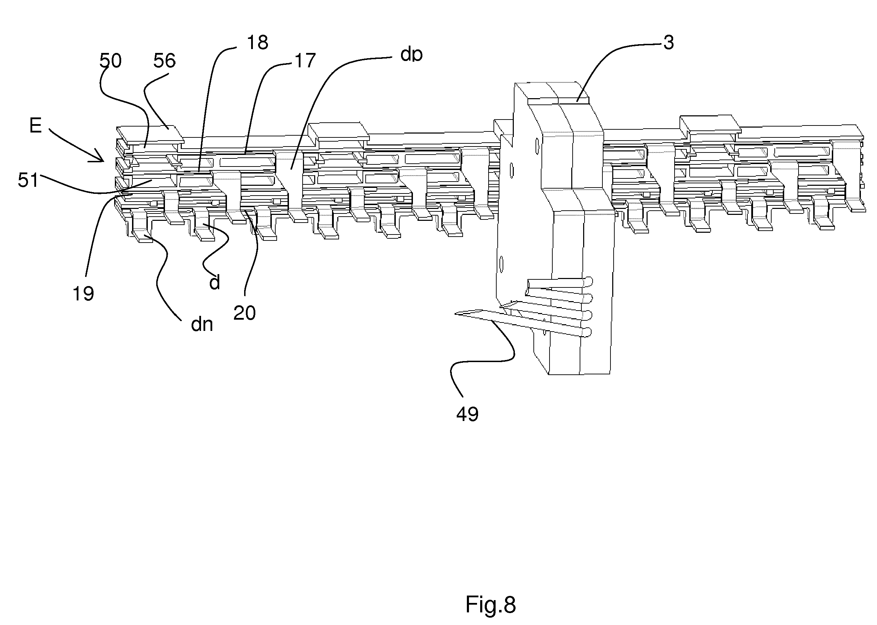

Sur la figure 8, selon une autre réalisation de l'invention, le module auxiliaire de raccordement 3 est raccordé au peigne 4 sensiblement au milieu de sa longueur et est alimenté en amont par des câbles 49.

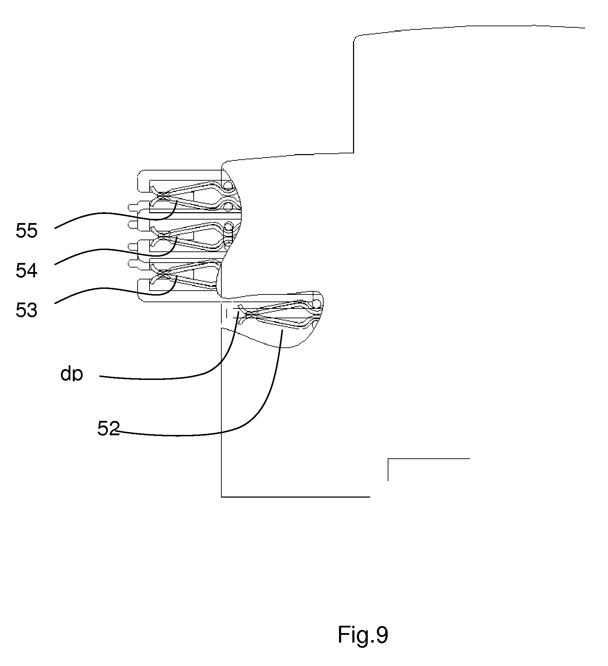

Selon la réalisation illustrée sur la figure 9, le peigne 4 est du type tétra polaire, et comporte dans une ou chacune de plusieurs zones de raccordement Z une seule dent de phase dp, ladite dent étant associée à une barre de phase. Ainsi, dans ce cas, le module de raccordement auxiliaire comporte une pince dite première 52 et trois pinces dites secondes 53, 54, 55.

On notera que dans chacune de ces réalisations, le peigne 4 comporte, dans chaque zone de raccordement Z, de part et d'autre des portions de barre p,q non équipées de dents d, des alvéoles 50,51 destinées à autoriser le passage des pinces dites secondes 47,48.

A cet effet, dans chacune de ces zones de raccordement Z, ces alvéoles sont crées au niveau de la dernière portion de barre r, lorsque celle-ci n'est pas équipée de dent, par surélévation d'une partie 56 de l'une des parois latérales du peigne.

Ainsi, tel que particulièrement illustré sur la figure 5, le peigne 4 pourra comporter plusieurs de ces zones de raccordement Z2,Z3,Z4, par exemple une zone de raccordement interposée entre deux série de dents tout au long du peigne, chaque série comportant une dent distribuant le neutre et une succession de dents dp distribuant les différentes phases.

Sur la figure 5 par exemple, deux zones successives Z1,Z2 sont séparées par une distance correspondant à la largeur de trois modules unitaires. Avantageusement, pour toutes les réalisations décrites, cette largeur des modules unitaires sera de 18mm. Ainsi, selon la réalisation de la figure 5, la distance séparant deux zones de raccordement Z1, Z2 est de 54 mm.

Grâce à l'invention et avantageusement, lorsque le peigne 4 comporte une zone de raccordement Z2,Z3 ou Z4 située ailleurs qu'à l'extrémité du peigne, ce peigne pourra être coupé juste avant cette zone de raccordement et juste après la dernière dent dr de la série de dents précédent ladite zone, et la partie du peigne située à droite du plan de coupe c pourra être réutilisée et de nouveau raccordée à un module auxiliaire de raccordement.

Lorsque ce peigne comportera deux zones de raccordement situées respectivement d'un côté et de l'autre d'un plan de coupe, les deux portions de peigne situées de part et d'autre de ce plan de coupe pourront être réutilisées en étant raccordées chacune à un module auxiliaire de raccordement.

Ainsi, lorsque le peigne comporte plusieurs zones de raccordement tout au long de sa longueur, celui-ci pourra être recoupé à volonté et réutilisé aussi bien pour sa partie située d'un côté que pour sa partie située de l'autre côté du plan de coupe concerné.

De même, grâce à l'invention, les avantages précités sont obtenus en utilisant un peigne standard, d'où un coût de fabrication réduit de cet ensemble de distribution électrique selon l'invention.

L'invention s'applique avantageusement aux peignes utilisés dans le domaine des tableaux électriques de distribution finale afin de distribuer facilement le neutre et les phases sur tous les départs électriques.

Bien entendu, l'invention n'est pas limitée aux modes de réalisation décrits et illustrés qui n'ont été donnés qu'à titre d'exemple.

C'est ainsi par exemple que la zone de raccordement précitée pourra être située à un autre endroit le long du rail, qu'à l'extrémité ou entre deux séries de dents, et cette zone pourra comporter par exemple une dent de neutre dn et une dent de phase 3 ou bien deux dents de phase successives, par exemple les phases 1 et 2 ou bien les phases 2 et 3 ou bien les phases 1 et 3 etc.... Dans ce cas, les pinces seront disposées différemment dans le module de raccordement.

On notera également que quelque soit le mode de réalisation retenu, le peigne pourra être recoupé en n'importe quel endroit du peigne entre deux zones de raccordement, et pas seulement juste avant une zone de raccordement, sans sortir du cadre de l'invention.

Au contraire, l'invention comprend tous les équivalents techniques des moyens décrits ainsi que leurs combinaisons si celles-ci sont réalisées comme définies par les revendications.

## Revendications

1. Ensemble de distribution électrique comportant un peigne multipolaire de répartition d'une énergie électrique entre une pluralité d'appareils électriques modulaires et un dispositif d'alimentation électrique dudit peigne, ledit peigne comportant au moins une barre conductrice comportant une rangée de dents disposées suivant un pas égal à une distance prédéterminée correspondant à au moins un module, lesdits appareils électriques présentant un format modulaire, chaque appareil présentant une forme globalement parallélépipédique et comportant deux faces principales et deux faces latérales s'étendant de l'une à l'autre des faces principales, avec une largeur, c'est-à-dire un écart entre les deux faces principales égale à un nombre entier de module(s), et avec l'une desdites faces latérales présentant au moins un orifice donnant accès à au moins une borne adaptée à recevoir une dent dudit peigne, ainsi qu'un dispositif d'alimentation dudit peigne comportant un module auxiliaire de raccordement électrique des bornes aval de l'un des appareil dit appareil tête de groupe avec respectivement les différentes barres du peigne de manière à assurer son alimentation, ledit module auxiliaire de raccordement étant juxtaposé aux autres appareils sur un rail de montage et disposé entre l'appareil tête de groupe et les autres appareils, les bornes aval et le peigne étant disposés respectivement d'un côté et de l'autre du rail,
**caractérisé en ce que** ledit peigne (4) comporte au moins une zone (Z,Z1,Z2,Z3,Z4) destinée au raccordement électrique du module auxiliaire de raccordement (3) audit peigne (4), ladite zone comportant un certain nombre de portions de barre p, q non équipées de dents et un certain nombre de portions de barres équipées de dents d, **en ce que** ledit module auxiliaire précité (3) comporte d'une part, au moins un élément de raccordement dits premiers (45,46) dont le nombre correspond au nombre de dents présentes dans cette zone, et d'autre part, un certain nombre d'éléments de raccordement dits seconds (47,48), ce nombre correspondant au nombre de portions de barres p,q ne comportant pas de dents dans cette zone, les éléments de raccordement dits premiers (45,46) étant destinés à coopérer avec les dents présentes dans cette zone tandis que les éléments de raccordement dits seconds (47,48) sont destinés à coopérer avec les portions de barre p,q ne comportant pas de dents d lors du raccordement électrique du module auxiliaire (3) audit peigne (4).

2. Ensemble de distribution selon la revendication 1, **caractérisé en ce que** les éléments de raccordement précités comportent des pinces (45 à 48).

3. Ensemble de distribution selon la revendication 1 ou 2, **caractérisé en ce que** les éléments de raccordement dits premiers (45,46) sont disposés dans un plan dit premier p1, et les éléments de raccordement dits seconds (47,48) sont disposés dans un plan dit second p2, ces deux plans étant décalés suivant la hauteur h des appareils, cette hauteur étant définie perpendiculairement aux faces latérales des appareils.

4. Ensemble de distribution selon l'une quelconque des revendications précédentes, **caractérisé en ce que** les éléments de raccordement dits premiers (45,46) sont situés à l'intérieur du module auxiliaire de raccordement (3) tandis que les éléments de raccordement dits seconds (47,48) sont situés à l'extérieur dudit module (3).

5. Ensemble de distribution selon l'une quelconque des revendications précédentes, **caractérisé en ce que** la ou chaque zone précitée (Z,Z1,Z2,Z3,Z4) présente une longueur, parallèlement à la direction longitudinale du peigne (4), correspondant sensiblement à celle d'un module.

6. Ensemble de distribution selon l'une quelconque des revendications précédentes, **caractérisé en ce que** le peigne précité (4) comporte une barre dite de neutre (20) et au moins une barre dite de phase (17 à 19), une dent de neutre dn étant disposée entre deux dents de phase dp successives, et **en ce que** dans la ou chacune des zones précitées (Z,Z1,Z2,Z3,Z4) le nombre d'éléments de raccordement dits premiers (45,46) est de deux et le nombre d'éléments de raccordement dits seconds (47,48) est de deux.

7. Ensemble de distribution selon la revendication 6, **caractérisé en ce que** le peigne précité (4) est du type tripolaire et neutre comportant une barre de neutre (20) et trois barres de phases (17 à 19).

8. Ensemble de distribution selon l'une quelconque des revendications 1 à 5, **caractérisé en ce que** le peigne précité (4) est du type tétra polaire et comporte quatre barres distribuant une phase, et **en ce que** le nombre d'éléments de raccordement dits premiers est de un tandis que le nombre d'éléments de raccordement dits seconds est de trois.

9. Ensemble de distribution selon l'une quelconque des revendications précédentes, **caractérisé en ce que** la longueur d'un module est de 18mm.

10. Ensemble de distribution selon l'une quelconque des revendications précédentes, **caractérisée en ce qu'**il comporte au moins une zone (Z,Z1,Z2,Z3,Z4) située ailleurs qu'à l'extrémité du peigne (4), ledit peigne étant apte à être sectionné (c) avant cette zone, la portion de peigne retirée étant réutilisable et pouvant être raccordée de nouveau à un autre module auxiliaire de raccordement.

11. Ensemble de distribution selon l'une quelconque des revendications précédentes, **caractérisé en ce qu'**il comporte plusieurs zones (Z,Z1,Z2,Z3,Z4) pouvant être raccordées chacune à un module auxiliaire de raccordement, lesdites zones étant séparées deux à deux par une portion de peigne dont la longueur correspond sensiblement à celle d'un multiple de la longueur d'un module.

12. Ensemble de distribution selon la revendication 11, **caractérisé en ce que** le peigne est du type tri polaire et neutre, lesdites zones Z,Z1 ,Z2,Z3,Z4 étant séparées deux à deux par une portion de peigne dont la longueur correspond sensiblement à trois fois la longueur d'un module.

13. Ensemble de distribution selon l'une quelconque des revendications précédentes, **caractérisé en ce que** ledit peigne (4) comporte plusieurs ensembles, chaque ensemble comportant une dent de neutre dn appartenant à la barre de neutre (20) et plusieurs dents de phase dp appartenant respectivement aux différentes barres de phase (17,18,19), ledit ensemble étant disposé de manière répétitive le long du peigne, et **en ce qu'**il comporte une zone de raccordement Z1 à un module auxiliaire de raccordement situé à l'une des extrémités du peigne et une zone de raccordement Z2,Z3,Z4 située entre deux ensembles successifs, et ce sur une partie seulement de la longueur du peigne ou bien sur toute la longueur du peigne.

14. Ensemble de distribution selon l'une quelconque des revendications précédentes, **caractérisé en ce que** le peigne (4) comporte une zone Z de raccordement à un module auxiliaire de raccordement (3) située sensiblement au milieu de la longueur du peigne de manière à équilibrer les charges électrique sur le peigne, ladite zone étant destinée à être reliée électriquement à un module auxiliaire de raccordement (3) alimenté en amont par des câbles (49).

15. Peigne de distribution destiné à être utilisé dans un ensemble de distribution électrique selon l'une quelconque des revendications précédentes.

16. Peigne de distribution électrique selon la revendication 15, **caractérisé en ce qu'**il comporte une enveloppe E réalisée en un matériau isolant et comportant un certain nombre de logements longitudinaux (13,14,15,16) destinés à recevoir respectivement lesdites barres conductrices (17 à 20) et permettant de retenir ces barres à l'intérieur de ces logements, lesdites barres étant superposées dans un même plan, à l'exception des dents faisant saillie de ce plan en direction des appareils modulaires (1,2).

17. Peigne de distribution selon la revendication 15 ou 16, **caractérisé en ce que** ladite enveloppe E comporte dans la ou les zones de raccordement précitée(s) Z,Z1 ,Z2,Z3, Z4 et de part et d'autres des portions de barre p, q ne comportant pas de dents, des portions d'enveloppe évidées ou alvéoles (50,51) de manière à permettre l'introduction des éléments de raccordement dits seconds (47,48) afin de réaliser la connexion de ces éléments de raccordement dits seconds (47,48) aux portions de barre p, q correspondantes.

## Patentansprüche

1. Elektrische Verteilungsanordnung, umfassend einen mehrpoligen Stromverteilungskamm zwischen einer Vielzahl von modularen elektrischen Geräten und einer Stromversorgungseinrichtung des Kamms, wobei der Kamm mindestens einen Leiterstab besitzt, umfassend eine Reihe von Zähnen, die in gleichmäßigen Abständen in einer vorbestimmten Distanz entsprechend mindestens einem Modul angeordnet sind, wobei die elektrischen Geräte ein modulares Format aufweisen, wobei jedes Gerät eine global parallelflache Form aufweist und zwei Hauptflächen und zwei Seitenflächen umfasst, die sich von der einen zur anderen der Hauptflächen mit einer Breite, d.h. einem Abstand zwischen den beiden Hauptflächen, gleich einer ganzen Zahl von Modul(en), und wobei eine der Seitenflächen mindestens eine Öffnung aufweist, die Zugang zu mindestens einer Klemme gewährt, die dazu vorgesehen ist, einen Zahn des Kamms aufzunehmen, sowie eine Versorgungseinrichtung des Kamms, umfassend ein Hilfsmodul für den elektrischen Anschluss der Klemmen stromabwärts zu einem der Geräte, Gruppenkopfgerät genannt, an jeweils die verschiedenen Stäbe des Kamms, um seine Versorgung zu gewährleisten, wobei das Hilfsanschlussmodul neben den anderen Geräten auf einer Montageschiene angeordnet und zwischen dem Gruppenkopfgerät und den anderen Geräten vorgesehen ist, wobei die stromabwärtigen Klemmen und der Kamm auf der einen bzw. der anderen Seite der Schiene angeordnet sind,
**dadurch gekennzeichnet, dass** der Kamm (4) mindestens eine Zone (Z, Z1, Z2, Z3, Z4) umfasst, die für den elektrischen Anschluss des Hilfsanschlussmoduls (3) an den Kamm (4) bestimmt ist, wobei die Zone eine gewisse Anzahl von Stababschnitten p, q, die nicht mit Zähnen ausgestattet sind, und eine gewisse Anzahl von Stababschnitten umfasst, die mit Zähnen d ausgestattet sind, dass das vorgenannte Hilfsmodul (3) einerseits mindestens ein so genanntes erstes Anschlusselement (45, 46) umfasst, dessen Anzahl der Anzahl von in dieser Zone vorhandenen Zähnen entspricht, und andererseits eine gewisse Anzahl von so genannten zweiten Anschlusselementen (47, 48) umfasst, wobei diese Anzahl der Anzahl von Stababschnitten p, q entspricht, die keine Zähne in dieser Zone umfassen, wobei die so genannten ersten Anschlusselemente (45, 46) dazu bestimmt sind, mit den in dieser Zone vorhandenen Zähnen zusammenzuwirken, während die so genannten zweiten Anschlusselemente (47, 48) dazu bestimmt sind, mit den Stababschnitten p, q, die keine Zähne d umfassen, beim elektrischen Anschluss des Hilfsmoduls (3) an den Kamm (4) zusammenzuwirken.

2. Verteilungsanordnung nach Anspruch 1, **dadurch gekennzeichnet, dass** die vorgenannten Anschlusselemente Klammern (45 bis 48) umfassen.

3. Verteilungsanordnung nach Anspruch 1 oder 2, **dadurch gekennzeichnet, dass** die so genannten ersten Anschlusselemente (45, 46) in einer so genannten ersten Ebene p1 angeordnet sind, und die so genannten zweiten Anschlusselemente (47, 48) in einer so genannten zweiten Ebene p2 angeordnet sind, wobei diese beiden Ebenen entlang der Höhe h der Geräte versetzt sind, wobei diese Höhe senkrecht auf die Seitenflächen der Geräte definiert ist.

4. Verteilungsanordnung nach einem der vorhergehenden Ansprüche, **dadurch gekennzeichnet, dass** die so genannten ersten Anschlusselemente (45, 46) im Inneren des Hilfsanschlussmoduls (3) angeordnet sind, während die so genannten zweiten Anschlusselemente (47, 48) außerhalb des Moduls (3) angeordnet sind.

5. Verteilungsanordnung nach einem der vorhergehenden Ansprüche, **dadurch gekennzeichnet, dass** die oder jede vorgenannte Zone (Z, Z1, Z2, Z3, Z4) eine Länge parallel zur Längsrichtung des Kamms (4) eine Länge im Wesentlichen entsprechend jener eines Moduls aufweist.

6. Verteilungsanordnung nach einem der vorhergehenden Ansprüche, **dadurch gekennzeichnet, dass** der vorgenannte Kamm (4) einen so genannten Nullleiterstab (20) und mindestens einen so genannten Phasenstab (17 bis 19) umfasst, wobei ein Zahn eines Nullleiters dn zwischen zwei aufeinanderfolgenden Phasenzähnen dp angeordnet ist, und dass in der oder jeder der vorgenannten Zonen (Z, Z1, Z2, Z3, Z4) die Anzahl von so genannten ersten Anschlusselementen (45, 46) zwei beträgt und die Anzahl von so genannten zweiten Anschlusselementen (47, 48) zwei beträgt.

7. Verteilungsanordnung nach Anspruch 6, **dadurch gekennzeichnet, dass** der vorgenannte Kamm (4) dreipoligen und neutralen Typs ist, umfassend einen Nullleiterstab (20) und drei Phasenstäbe (17 bis 19).

8. Verteilungsanordnung nach einem der Ansprüche 1 bis 5, **dadurch gekennzeichnet, dass** der vorgenannte Kamm (4) vierpoligen Typs ist und vier Stäbe umfasst, die eine Phase verteilen, und dass die Anzahl von so genannten ersten Anschlusselementen eins ist, während die Anzahl von so genannten zweiten Anschlusselementen drei ist.

9. Verteilungsanordnung nach einem der vorhergehenden Ansprüche, **dadurch gekennzeichnet, dass** die Länge eines Moduls 18 mm ist.

10. Verteilungsanordnung nach einem der vorhergehenden Ansprüche, **dadurch gekennzeichnet, dass** sie mindestens eine Zone (Z, Z1, Z2, Z3, Z4) umfasst, die sich woanders als am Ende des Kamms (4) befindet, wobei der Kamm geeignet ist, mit vor dieser Zone abgetrennt zu werden (c), wobei der abgenommene Kammabschnitt wiederverwendbar ist und wieder an ein anderes Hilfsanschlussmodul angeschlossen werden kann.

11. Verteilungsanordnung nach einem vorhergehenden Ansprüche, **dadurch gekennzeichnet, dass** sie mehrere Zonen (Z, Z1, Z2, Z3, Z4) umfasst, die jeweils an ein Hilfsanschlussmodul angeschlossen werden können, wobei die Zonen zwei und zwei durch einen Kammabschnitt getrennt sind, dessen Länge im Wesentlichen jener eines Vielfachen der Länge eines Moduls entspricht.

12. Verteilungsanordnung nach Anspruch 11, **dadurch gekennzeichnet, dass** der Kamm dreipoligen und neutralen Typs ist, wobei die Zonen Z, Z1, Z2, Z3, Z4 zwei und zwei durch einen Kammabschnitt getrennt sind, dessen Länge im Wesentlichen dreimal der Länge eines Moduls entspricht.

13. Verteilungsanordnung nach einem der vorhergehenden Ansprüche, **dadurch gekennzeichnet, dass** der Kamm (4) mehrere Einheiten umfasst, wobei jede Einheit einen Nullleiterzahn, der dem Nullleiterstab (20) angehört, und mehrere Phasenzähne dp umfasst, die jeweils den verschiedenen Phasenstäben (17, 18, 19) angehören, wobei die Einheit wiederholbar entlang des Kamms angeordnet ist, und dass sie eine Anschlusszone Z1 an ein Hilfsanschlussmodul, das sich an einem der Enden des Kamms befindet, und eine Anschlusszone Z2, Z3, Z4 umfasst, die sich zwischen zwei aufeinanderfolgenden Einheiten befindet, und zwar nur auf einem Teil der Länge des Kamms oder auch auf der gesamten Länge des Kamms.

14. Verteilungsanordnung nach einem der vorhergehenden Ansprüche, **dadurch gekennzeichnet, dass** der Kamm (4) eine Anschlusszone Z an ein Hilfsanschlussmodul (3) umfasst, die sich im Wesentlichen in der Mitte der Länge des Kamms befindet, um die elektrischen Ladungen auf dem Kamm auszugleichen, wobei die Zone dazu bestimmt ist, elektrisch mit einem Hilfsanschlussmodul (3) verbunden zu werden, das stromaufwärts durch Kabel (49) versorgt wird.

15. Verteilungskamm, der dazu bestimmt ist, in einer Stromverteilungsanordnung nach einem der vorhergehenden Ansprüche verwendet zu werden.

16. Stromverteilungskamm nach Anspruch 15, **dadurch gekennzeichnet, dass** er eine Hülle E umfasst, die aus einem Isoliermaterial hergestellt ist und eine gewisse Anzahl von Längsaufnahmen (13, 14, 15, 16) umfasst, die dazu bestimmt sind, jeweils die Leiterstäbe (17 bis 20) aufzunehmen, und die es ermöglicht, diese Stäbe im Inneren dieser Aufnahmen zu halten, wobei die Stäbe in einer selben Ebene übereinander angeordnet sind, mit Ausnahme der Zähne, die aus dieser Ebene in Richtung der modularen Geräte (1, 2) herausragen.

17. Verteilungskamm nach Anspruch 15 oder 16, **dadurch gekennzeichnet, dass** die Hülle E in der oder den vorgenannten Anschlusszone(n) Z, Z1, Z2, Z3, Z4 und beiderseits der Stababschnitte p, q, die keine Zähne umfassen, ausgenommene oder wabenartige Hüllenabschnitte (50, 51) umfasst, um die Einführung der so genannten zweiten Anschlusselemente (47, 48) zu ermöglichen, um den Anschluss dieser so genannten zweiten Anschlusselemente (47, 48) an die entsprechenden Stababschnitte p, q durchzuführen.

## Claims

1. Electric distribution assembly comprising a multipole comb for distributing electric power between a plurality of modular electric units and comprising an electric power supply device of said comb, said comb comprising at least one conducting bar comprising a row of teeth disposed at a pitch equal to a predetermined distance corresponding to at least one module, said electric units having a modular format, each unit having a parallelepipedic shape on the whole and comprising two main faces and two side faces extending from one to the other of the main faces, with a width, that is to say a distance between the two main faces, equal to an integer module number, and with one of said side faces having at least one opening giving access to at least one terminal suitable for receiving a tooth of said comb, as well as a power supply device of said comb comprising an auxiliary module for electrically connecting downstream terminals of one of the units referred to as a lead unit to the different bars of the comb respectively so as to ensure the power supply to the comb, said auxiliary connection module being juxtaposed to the other units on a mounting rail and disposed between the lead unit and the other units, the downstream terminals and the comb being disposed on either side of the rail respectively,
**characterized in that** said comb (4) comprises at least one zone (Z, Z1, Z2, Z3, Z4) intended for the electrical connection of the auxiliary connection module (3) to said comb (4), said zone comprising a certain number of bar portions p, q not equipped with teeth and a certain number of bar portions equipped with teeth d, **in that** said aforementioned auxiliary module (3) comprises on the one hand at least one connection element referred to as first connection elements (45, 46), of which the number corresponds to the number of teeth present in this zone, and on the other hand a certain number of connection elements referred to as second connection elements (47, 48), this number corresponding to the number of bar portions p, q not comprising teeth in this zone, the connection elements referred to as first connection elements (45, 46) being intended to cooperate with the teeth present in this zone, whereas the connection elements referred to as second connection elements (47, 48) are intended to cooperate with the bar portions p, q not comprising teeth d during the electrical connection of the auxiliary module (3) to said comb (4).

2. Distribution assembly according to Claim 1, **characterized in that** the aforementioned connection elements comprise pincers (45 to 48).

3. Distribution assembly according to Claim 1 or 2, **characterized in that** the connection elements referred to as first connection elements (45, 46) are disposed in a plane referred to as the first plane p1, and the connection elements referred to as second connection elements (47, 48) are disposed in a plane referred to as a second plane p2, these two planes being offset over the height h of the units, this height being defined perpendicularly to the side faces of the units.

4. Distribution assembly according to any one of the preceding claims, **characterized in that** the connection elements referred to as first connection elements (45, 46) are situated inside the auxiliary connection module (3), whereas the connection elements referred to as second connection elements (47, 48) are situated outside said module (3).

5. Distribution assembly according to any one of the preceding claims, **characterized in that** the or each aforementioned zone (Z, Z1, Z2, Z3, Z4) has a length, parallel to the longitudinal direction of the comb (4), corresponding substantially to that of a module.

6. Distribution assembly according to any one of the preceding claims, **characterized in that** the aforementioned comb (4) comprises a bar referred to as a neutral bar (20) and at least one bar referred to as a phase bar (17 to 19), a neutral tooth dn being disposed between two successive phase teeth dp, and **in that**, in the or each of the aforementioned zones (Z, Z1, Z2, Z3, Z4), the number of connection elements referred to as first connection elements (45, 46) is two and the number of connection elements referred to as second connection elements (47, 48) is two.

7. Distribution assembly according to Claim 6, **characterized in that** the aforementioned comb (4) is of the 3-pole and neutral type comprising a neutral bar (20) and three phase bars (17 to 19).

8. Distribution assembly according to any one of Claims 1 to 5, **characterized in that** the aforementioned comb (4) is of the 4-pole type and comprises four bars distributing a phase, and **in that** the number of connection elements referred to as first connection elements is one, whereas the number of connection elements referred to as second connection elements is three.

9. Distribution assembly according to any one of the preceding claims, **characterized in that** the length of a module is 18 mm.

10. Distribution assembly according to any one of the preceding claims, **characterized in that** it comprises at least one zone (Z, Z1, Z2, Z3, Z4) situated away from the end of the comb (4), said comb being able to be sectioned (c) before this zone, the removed portion of comb being reusable and being connectable again to another auxiliary connection module.

11. Distribution assembly according to any one of the preceding claims, **characterized in that** it comprises a number of zones (Z, Z1, Z2, Z3, Z4) that can each be connected to an auxiliary connection module, each two of said zones being separated by a comb portion of which the length corresponds substantially to that of a multiple of the length of a module.

12. Distribution assembly according to Claim 11, **characterized in that** the comb is of the 3-pole and neutral type, each two of said zones Z, Z1, Z2, Z3, Z4 being separated by a comb portion of which the length corresponds substantially to three times the length of a module.

13. Distribution assembly according to any one of the preceding claims, **characterized in that** said comb (4) comprises a number of assemblies, each assembly comprising a neutral tooth dn belonging to the neutral bar (20) and a number of phase teeth dp belonging respectively to the different phase bars (17, 18, 19), said assembly being disposed repetitively along the comb, and **in that** said comb comprises a zone of connection Z1 to an auxiliary connection module situated at one of the ends of the comb and a connection zone Z2, Z3, Z4 situated between two successive assemblies, more specifically only over a part of the length of the comb or over the entire length of the comb.

14. Distribution assembly according to any one of the preceding claims, **characterized in that** the comb (4) comprises a zone Z of connection to an auxiliary connection module (3) situated substantially in the middle of the length of the comb so as to balance the electric charges over the comb, said zone being intended to be electrically connected to an auxiliary connection module (3) supplied with power upstream by wires (49).

15. Distribution comb intended to be used in an electric distribution assembly according to any one of the preceding claims.

16. Electric distribution comb according to Claim 15, **characterized in that** it comprises a casing E made of an insulating material and comprising a certain number of longitudinal seats (13, 14, 15, 16) intended to receive said conducting bars (17 to 20) respectively and making it possible to retain these bars within these seats, said bars being superimposed in the same plane, with the exception of the teeth protruding from this plane in the direction of the modular units (1, 2).

17. Distribution comb according to Claim 15 or 16, **characterized in that** said casing E comprises, in the aforementioned connection zone or zones Z, Z1, Z2, Z3, Z4 and on either side of the bar portions p, q not comprising teeth, hollow casing portions or recesses (50, 51) so as to allow the introduction of the connection elements referred to as second connection elements (47, 48) in order to produce the connection of these connection elements referred to as second connection elements (47, 48) to the corresponding bar portions p, q.
